# EUROPEAN PATENT SPECIFICATION

(11) **EP 1 795 788 B1**
(45) Date of publication and mention of the grant of the patent: **31.03.2010**
(21) Application number: 07103508.3
(22) Date of filing: 10.04.2004
(51) Int. Cl.: F16J 15/32, B60T 8/32, B60B 27/00, G01P 3/44

(54) **A bearing for a wheel of vehicle**
Lagerung für ein Kraftfahrzeugrad
Palier de roue de véhicule

(30) Priority: 17.04.2003 JP 2003112329; 20.06.2003 JP 2003176574
(43) Date of publication of application: 13.06.2007
(62) Divisional of application: 04008689.4
(73) Proprietor: NTN Corporation, Osaka-shi, Osaka 550-0003 (JP)
(72) Inventor: Ohtsuki, Hisashi, Shizuoka-ken (JP); Nishino, Kouji, Shizuoka-ken (JP)
(74) Representative: Cohausz & Florack

(56) References cited:
- EP-A- 1 426 257
- US-A- 5 407 213
- US-A1- 2002 126 926
- PATENT ABSTRACTS OF JAPAN vol. 2000, no. 25, 12 April 2001 (2001-04-12) & JP 2001 215132 A (NTN CORP), 10 August 2001 (2001-08-10)

## Description

### BACKGROUND OF THE INVENTION

### Field of the Invention

The present invention relates to a bearing for rotatably supporting a wheel of vehicle such as an automobile relative to a body of vehicle and more particularly to an improvement of a sealing structure to which a magnetic encoder for detecting the speed of wheel rotation is integrally mounted.

### Description of Background Art

It has been known to those skilled in the art the bearing for a wheel of vehicle having a sealing device to which a magnetic encoder for detecting the rotation speed of wheel is integrally mounted.

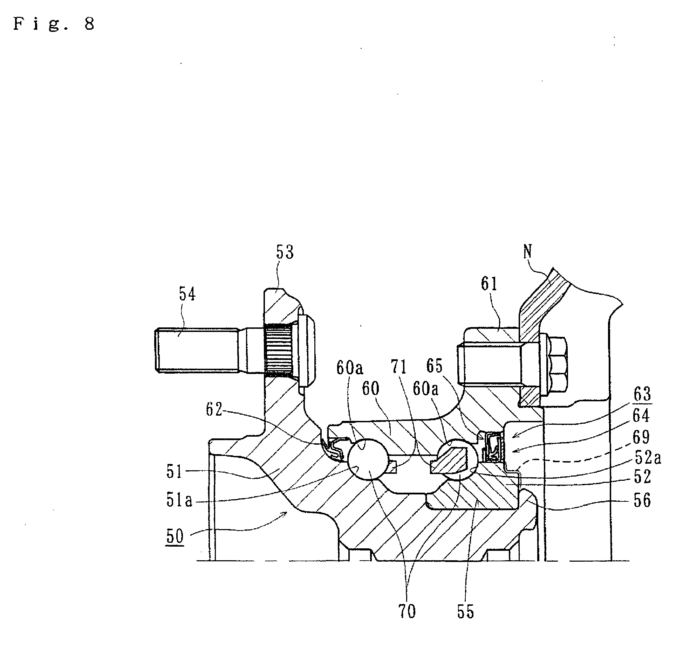

Fig. 8 is a cross-section view of a bearing for a wheel of vehicle of the prior art comprising an inner member 50, an outer member 60, and double row rolling elements 70 and 70 arranged between the inner and outer members 50 and 60. The inner member 50 comprises a hub wheel 51 and an inner ring 52 fitted on the hub wheel 51. The hub wheel 51 is formed integrally with a wheel mounting flange 53 for mounting a wheel (not shown) thereon and hub bolts 54 for securing the wheel are equidistantly arranged along the periphery of the flange 53. The inner ring 52 is press-fitted on a stepped portion 55 of small diameter formed on the hub wheel 51. The end of the stepped portion 55 is plastically deformed radially outward to form a caulked portion 56 for preventing the inner ring 52 from being axially felt out from the hub wheel 51.

The outer member 60 is formed integrally with a body mounting flange 61 to be mounted on a knuckle "N" at the periphery thereof and also formed with double row outer raceway surfaces 60a and 60a at an inner circumferential surface oppositely to the inner raceway surfaces. In the inner member 50, double row inner raceway surfaces 51a and 52a are formed on the outer circumferential surfaces of the hub wheel 51 and the inner ring 52 respectively oppositely to the double row outer raceway surfaces 60a and 60a of the outer member 60. Double row rolling elements (balls) 70 and 70 are arranged between the outer and inner raceway surfaces 60a and 51a; 60a and 52a; and held to be freely rolled by cages 71 and 71. Sealing devices 62 and 63 are mounted on the ends of the outer member 60 for preventing leak of lubricating grease contained within the bearing and also preventing penetration of rain water or dusts into the bearing from the ambient circumstance. The bearing having such a structure is called a "third generation".

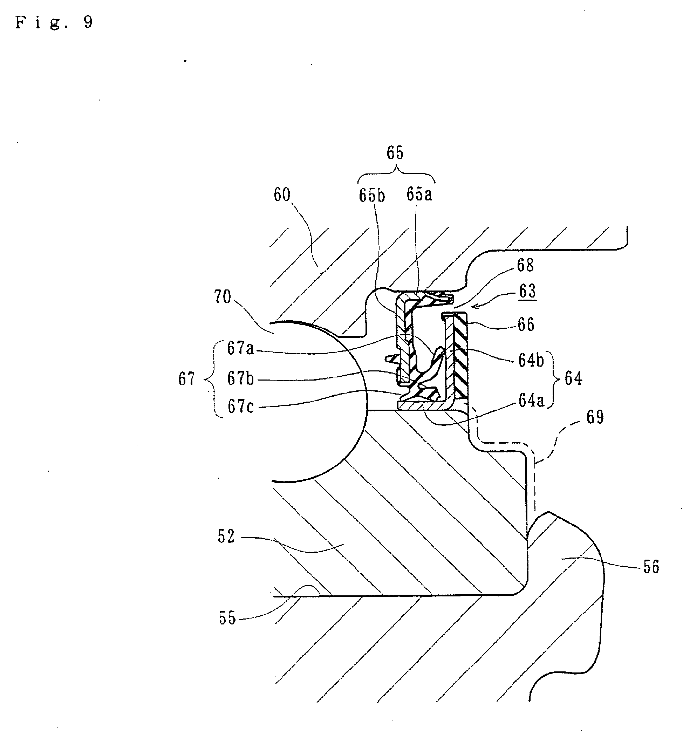

In such a bearing for a wheel of vehicle, the sealing device 63, as clearly shown in an enlarged view of Fig. 9, has first and second annular sealing plates 64 and 65 mounted on the inner ring 52 and the outer member 60 respectively. Each of these sealing plates 64 and 65 has a substantially "L"-shaped cross-section formed respectively by a cylindrical portion 64a and 65a and a radially extending portion 64b and 65b and the sealing plates 64 and 65 are arranged oppositely to each other. The radially extending portion 64b of the first sealing plate 64 has an encoder 66 for detecting the wheel rotation speed bonded thereto via vulcanization at inboard side of the bearing. The encoder 66 is made of rubber magnet in which magnetic substance powder is mingled and N and S poles are alternately magnetized along the circumferential direction of the encoder.

The second sealing plate 65 has a sealing member 67 bonded thereto via vulcanization having an integrally formed side-lip 67 slide-contacting with the radially extending portion 64b and other integrally formed radial-lips 67b and 67c slide-contacting with the cylindrical portion 64a. A tip of the radially extending portion 64b of the first sealing plate 64 is opposed to the cylindrical portion 65a of the second sealing plate 65 with keeping a slight radial gap therebetween forming a labyrinth seal 68.

Although the first sealing plate 64 forming a slinger is press-fitted on the outer circumferential surface of the inner ring 52, traces of water would penetrate into the inside of bearing through the fitted portion. Such a penetration of water causes not only degradation of the lubricating grease and thus life reduction of the bearing but generation of rust in the first sealing plate 64 and thus wear of the sealing lips.

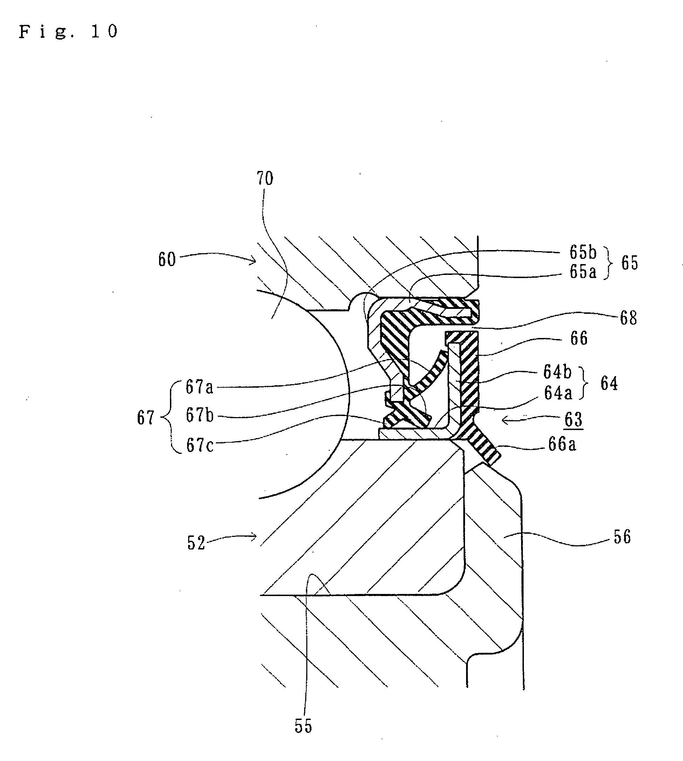

For solving this problem, the applicant of the present invention has proposed in Japanese Laid-open Patent Publication No. 215132/2001 a sealing structure shown in Fig. 10. According to this sealing structure, a projected piece 66a extending from the encoder 66 elastically contacts with the caulked portion 56 to seal an exposed surface 69 (see Fig. 9) of the inner ring 52 and also to prevent water from penetrating into the bearing through the abutted surface between the end face of the inner ring 52 and the caulked portion 56.

However, since the rubber magnet member forming the encoder 66 is mingled with a great deal of magnetic powder, it becomes not only expensive but lack of appropriate elasticity. In addition, hoop stress would be sometimes caused between the fitted surfaces of the inner ring 52 and the sealing plate 64 by the radial plastic deformation of the stepped portion 55 of small diameter due to caulking working. If corrosion would proceed in this fitted portion under such a circumstance, the diffusible hydrogen existing in nature will penetrate into the metallographic structure of the inner ring 52 and destroy the metallic grain boundancy thereof and thus cause undesirable so-called "delayed fracture".

In addition, since the surface of the encoder 66 is exposed to the circumstance and arranged oppositely to a speed sensor (not shown) via a predetermined gap thereto, dusts or sands would penetrate into the gap and wear their surfaces. Increase of the air gap between the encoder 66 and the speed sensor caused by the wear of them causes reduction of the accuracy of detection.

### SUMMARY OF THE INVENTION

Document US 2002/0126926 A1 discloses according to the preamble of claims 1 and 2 a wheel support bearing assembly including inner and outer members and at least one row of rolling elements interposed between the inner and outer members. An annular sealing device seals the space defined between the inner and outer members and includes two annular L-shaped sealing plates. The first sealing plate is fitted to the inner member and an elastic member mixed with magnetic material is bonded to the radial wall of the first sealing plate. The wheel support bearing assembly also comprises a protective cover made of a non-magnetic material that is positioned on one side adjacent an exterior of the multi-pole magnet with a predetermined air gap left therebetween.

A seal device for a bearing for a wheel is disclosed in document JP 2001/215132. The seal device is provided between an inner member and an outer member and comprises two seal plates and an elastic member acting as an encoder. While the encoder is attached to the first seal plate, sealing lips are provided to the second seal plate.

Document EP-A2-1 426 257 discloses a protective cap for a wheel support bearing assembly. The wheel support bearing assembly comprises a sealing unit in which a magnetic encoder and two annular sealing plates are included. The protective cap comprises an annular cover-up portion for enclosing the annular surface of the magnetic encoder and an cylindrical engagement wall integral with the annular cover-up portion and capable of being removably engaged in the wheel support bearing assembly.

### SUMMARY OF THE INVENTION

It is, therefore, an object of the present invention to provide a bearing for a wheel of vehicle having a magnetic encoder which can prevent the penetration of water through the fitted portion of the sealing plate to improve the life of bearing and also can protect the encoder.

For achieving the object mentioned above, there is provided a bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting flange at the periphery and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, wherein the sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is an encoder in which magnetic substance powder is mingled and N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; a protecting cover is mounted on the first sealing plate so that it intimately contacts with the surface of the encoder; and the protecting cover is positioned with keeping a slight radial gap relative to the cylindrical portion of the second sealing plate, CHARACTERIZED in that the first sealing plate is formed as a cap integrally formed with a cylindrical portion formed by folding a portion of the radially extending portion and being mounted on the outer circumferential surface of the inner ring, and a bottom portion for covering the caulked portion.

According to the characterized features of the sealing device of the bearing for a wheel of vehicle mentioned above, it is possible to obtain excellent sealing ability, to prevent penetration of rain water or dusts into the bearing from the ambient circumstance and thus damage of the surface of encoder, and accordingly to keep the detecting accuracy unchanged. In addition, it is also possible to reduce the air gap between the encoder and the vehicle speed detecting sensor and thus to improve the detecting accuracy as compared with the structure having the separate cover for covering the sealing device.

According to this structure, since the fitted portion as well as the inner ring are not exposed to the ambient circumstance, it is possible to prevent progression of corrosion in these portions, penetration of diffusible hydrogen existing in nature into the metallographic structure of the inner ring 52 and destroy the metallic grain boundancy thereof and thus generation of undesirable delayed fracture.

For achieving the object mentioned above, there is alternatively provided a bearing for a wheel of vehicle comprising the features of claim 2.

It is preferable that the protecting cover has a cylindrical portion mounted on the outer circumferential surface of the first sealing plate and a radially extending portion extending radially inward from the end of the cylindrical portion and contacted with the surface of the encoder. This structure is simple and thus enables the assembly easy. In addition, it is possible to reduce the air gap between the encoder and the vehicle speed detecting sensor and thus to improve the detecting accuracy.

It is preferable that the protecting cover is formed as a cap integrally formed with a cylindrical portion mounted on the outer circumferential surface of the first sealing plate, a radially extending portion extending radially inward from the end of the cylindrical portion and intimately contacted with the surface of the encoder and a bottom portion for covering the caulked portion. According to this structure, it is possible to prevent progression of corrosion in these portions, penetration of diffusible hydrogen existing in nature into the metallographic structure of the inner ring 52 and destroy the metallic grain boundancy thereof and thus generation of undesirable delayed fracture. In addition, since the surface of encoder is covered by the radially extending portion of the protecting cover made of non-magnetic material, it is possible to prevent damage of the surface of encoder.

It is preferable that the protecting cover is secured to the first sealing portion by a caulked portion formed on the cylindrical portion of the protecting cover. This structure enables to more positively secure the protecting cover to the outer circumferential surface of the first sealing plate.

It is also preferable that the protecting cover is formed by press forming of a non-magnetic steel sheet or by injection molding of synthetic resin.

It is preferable that the second sealing plate is integrally formed with radial-lip(s) directly slide-contacting with the outer circumferential surface of the inner ring. Compact design of the second sealing plate can be attained by this structure without any restriction as to shape or dimension of the bearing space or sealing plates. The radial-lips can prevent leak of lubricating grease contained within the bearing and also penetration of rain water or dusts into the bearing from the ambient circumstance.

### Effects obtained by the invention

As previously stated, there is provided a bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting flange at the periphery and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, CHARACTERIZED in that: an sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is an encoder in which magnetic substance powder is mingled and N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; a protecting cover is mounted on the first sealing plate so that it contacts with the surface of the encoder; and the protecting cover is positioned with keeping a slight radial gap relative to the cylindrical portion of the second sealing plate. According to the characterized features of the sealing device of the bearing for a wheel of vehicle, it is possible to obtain excellent sealing ability, to prevent penetration of rain water or dusts into the bearing from the ambient circumstance and thus damage of the surface of encoder, and accordingly to keep the detecting accuracy unchanged. In addition, it is also possible to reduce the air gap between the encoder and the vehicle speed detecting sensor and thus to improve the detecting accuracy as compared with the structure having the separate cover for covering the sealing device.

### Best mode for carrying out the invention

A bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting flange at the periphery and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, CHARACTERIZED in that: a sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is an encoder in which magnetic substance powder is mingled and N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; a protecting cover is mounted on the first sealing plate; the protecting cover is formed as a cap integrally formed with a cylindrical portion mounted on the outer circumferential surface of the first sealing plate, a radially extending portion extending radially inward from the end of the cylindrical portion and intimately contacted with the surface of the encoder, and a bottom portion for covering the end of the inner ring and caulked portion; and the protecting cover positioned with keeping a slight radial gap relative to the cylindrical portion of the second sealing plate.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a bearing for a wheel of vehicle of the present invention;
Fig. 2 is a partially enlarged longitudinal-section view of Fig. 1;
Fig. 3 is a partially enlarged longitudinal-section view of a second embodiment of a bearing for a wheel of vehicle of the present invention;
Fig. 4 is a partially enlarged longitudinal-section view of a third embodiment of a bearing for a wheel of vehicle of the present invention;
Fig. 5 is a longitudinal-section view of a fourth embodiment of a bearing for a wheel of vehicle of the present invention;
Fig 6 (a) is a partially enlarged longitudinal-section view of Fig. 5, and Fig. 6 (b) is a modified embodiment of Fig. 6 (a);
Fig. 7 (a) is a partially enlarged longitudinal-section view of a fifth embodiment of a bearing for a wheel of vehicle of the present invention, and Fig. 7 (b) is a modified embodiment of Fig. 7 (a);
Fig. 8 is a longitudinal-section view of a bearing for a wheel of vehicle of the prior art;
Fig. 9 is a partially enlarged longitudinal-section view of Fig. 8; and
Fig. 10 is a longitudinal-section view of another bearing for a wheel of vehicle of the prior art.

### DESCRIPTION OF THE PREFERRED EMBODIMENTS

Preferred embodiments of the present invention will be described with reference to accompanied drawings.

### First Embodiment

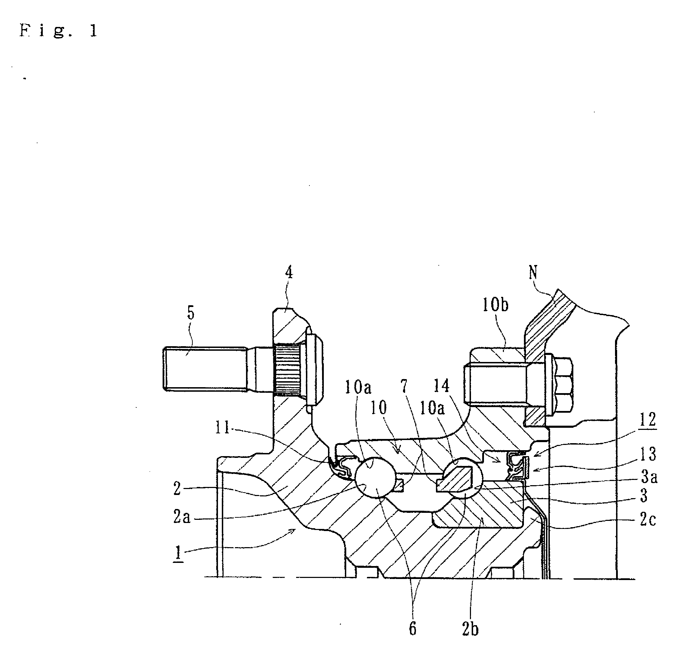

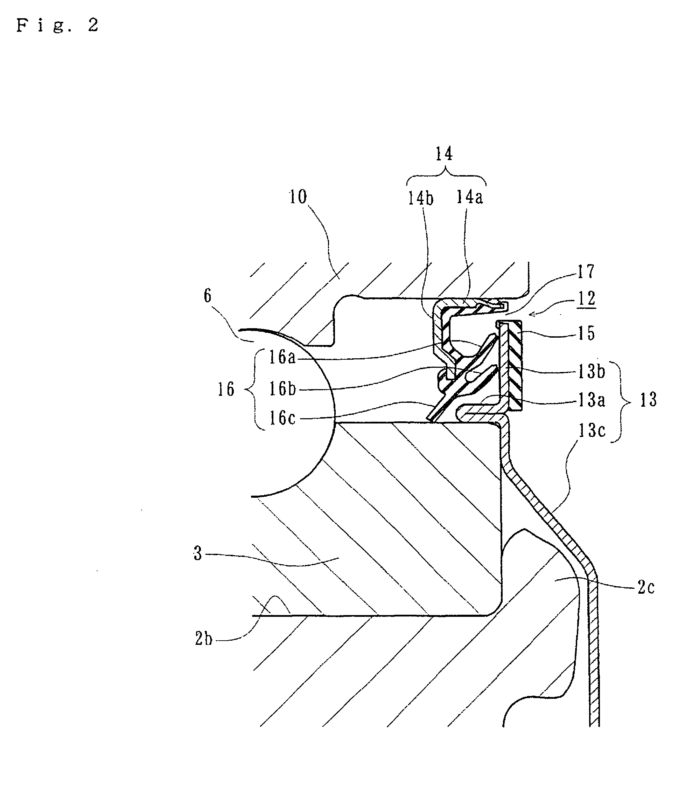

Fig. 1 is a longitudinal-section view of a first embodiment of a bearing for a wheel of vehicle of the present invention, and Fig. 2 is a partially enlarged longitudinal-section view of Fig. 1. In the description of the present invention, a side of a bearing positioned outward a vehicle when it is mounted on a vehicle is referred to as "outboard" side (the left side in a drawing), and a side inward a vehicle is referred to as "inboard" side (the right side in a drawing).

The bearing of Fig. 1 comprises an inner member 1, an outer member 10, and double row rolling elements 6 and 6 held between the inner and outer members 1 and 10. The inner member 1 includes a hub wheel 2 and a separate inner ring 3 fitted on the outer circumferential surface of the hub wheel 2. The hub wheel 2 is formed integrally with a wheel mounting flange 4 for mounting a wheel (not shown) thereon and hub bolts 5 for securing the wheel are equidistantly arranged along the periphery of the flange 4. The inner ring 3 is press-fitted on a stepped portion 2b of small diameter formed on the hub wheel 2. The end of the stepped portion 2b is plastically deformed radially outward to form a caulked portion 2c for preventing the inner ring 3 from being axially felt out from the hub wheel 2.

The outer member 10 is formed integrally with a body mounting flange 10b to be mounted on a knuckle "N" at the periphery thereof and also formed with double row outer raceway surfaces 10a and 10a at an inner circumferential surface oppositely to the inner raceway surfaces. In the inner member 1, double row inner raceway surfaces 2a and 3a are formed on the outer circumferential surfaces of the hub wheel 2 and the inner ring 3 respectively oppositely to the double row outer raceway surfaces 10a and 10a of the outer member 60. Double row rolling elements (balls) 6 and 6 are arranged between the outer and inner raceway surfaces 10a and 2a; 10a and 3a; and held to be rolled by cages 7 and 7. Sealing devices 11 and 12 are mounted on the ends of the outer member 10 for preventing leak of lubricating grease contained within the bearing and also preventing penetration of rain water or dusts into the bearing from the ambient circumstance. The bearing having such a structure is called a "third generation". Although there is illustrated a double row angular ball bearing, a double row tapered roller bearing may be also used.

The hub wheel 2 is made of medium carbon steel such as S53C including carbon of 0.40 ~ 0.80 wt%. The inner raceway surface 2a of outboard side, the seal land portion with which the sealing device 11 slide-contacts, and the stepped portion 2b of small diameter are heat treated by the high frequency induction heating as having a surface hardness of HRC 58 ~ 64. The caulked portion 2c is remained as no heat treated portion having a surface hardness less than HRC 24 after forging. On the contrary, the inner ring 3 is made of high carbon chrome bearing steel such as SUJ 2 and is hardened to its core by dipping quenching as having a surface hardness of HRC 54 ~ 64.

The inner member 10 is made of medium carbon steel such as S53C including carbon of 0.40 ~ 0.80 wt%. The double row outer raceway surface 10a and 10a and the inner circumferential surface of the end of the outer member to which the sealing devices 11 and 12 are fitted are heat treated by the high frequency induction heating as having a surface hardness of HRC 58 ~ 64.

As clearly shown in Fig. 2, the sealing device 12 of inboard side has first and second sealing plates 13 and 14 mounted on the inner ring 3 and the outer member 10 respectively. The first sealing plate 13 is formed as a cap integrally formed with a fitted portion 13a formed by folding a portion of the radially extending portion and being mounted on the outer circumferential surface of the inner ring, a radially extending portion 13b extending radially outwardly from the end of the fitted portion 13a, and a bottom portion 13c for covering the caulked portion 2c. The first sealing plate 13 is made by press working of ferrite-stainless steel sheet (e.g. JIS SUS 430 etc.) or preserved cold rolled steel sheet (e.g. JIS SPCC etc.). Bonded by vulcanization integrally on the radially extending portion 13b at its inboard side is a rotary encoder 15 for detecting the speed of wheel rotation made of elastomer material such as rubber with which magnetic substance powder such as ferrite powder is mingled and in which N and S poles are alternately magnetized at a predetermined pitch on the pitch circle diameter (PCD) along the circumferential direction thereof.

The second sealing plate 14 is made of austenitic-stainless steel sheet (e.g. JIS SUS 304 etc.) or preserved cold rolled steel sheet (e.g. JIS SPCC etc.) and has a cylindrical portion 14a and a radially extending portion 14b to form a substantially "L" shaped configuration by press working. Bonded by vulcanization on the second sealing plate 14 is a sealing member 16 integrally formed by side-lips 16a and 16b slide-contacting with the radially extending portion 13b of the first sealing plate 13 and a radial-lip 16c slide-contacting with the outer circumferential surface of the inner ring 3. Accordingly, this radial lip 16c makes it possible to positively prevent penetration of rain water or dusts into the bearing from the ambient circumstance without any restriction. A tip of the radially extending portion 13b of the first sealing plate 13 is opposed to the cylindrical portion 14a of the second sealing plate 14 with keeping a slight radial gap therebetween forming a labyrinth seal 17.

Although it is illustrated the structure having a pair of side-lips 16a and 16b and the radial-lip 16c, any other structure such as one having single side-lip and a pair of radial-lips in accordance with objects or a space of the sealing device. In addition, it is also possible to provide a pair of radial-lips 16c and to have one of them slide-contacted with the outer circumferential surface of the fitted portion 13a.

According to the first embodiment, since the first sealing plate 13 is formed as the cap configuration having the bottom portion 13c as well as the fitted portion 13a of folded structure is press-fitted on the outer circumferential surface of the inner ring 3, the fitted surfaces, inner ring 3, and the abutted surfaces between the inner ring 3 and the caulked portion 2c are never exposed to the ambient circumstance and thus it is possible to prevent generation of delayed fracture due to penetration of the diffusible hydrogen existing in the ambient circumstance into metallographic structure of the inner ring 3 when corrosion would proceed in these fitted portions.

### Second embodiment

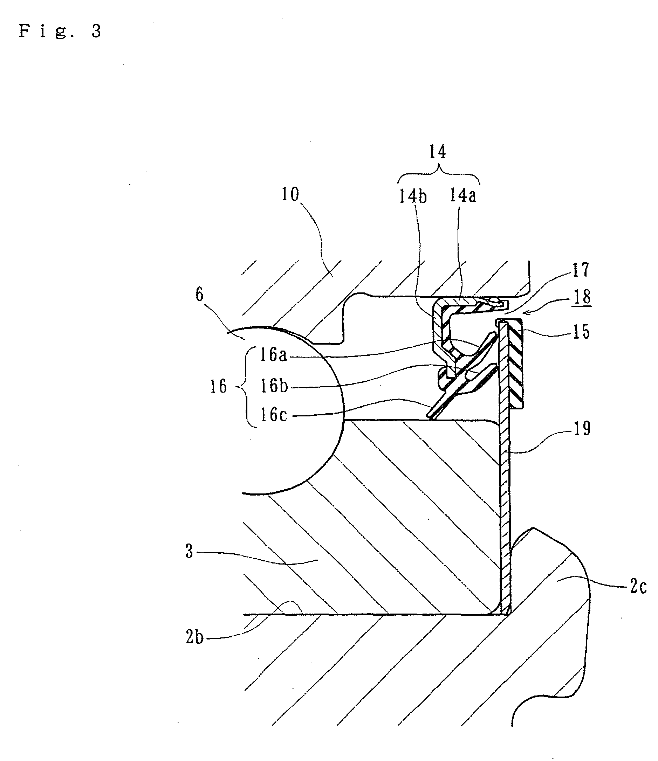

A second embodiment of the bearing for a wheel of vehicle is shown in a partially enlarged view of Fig. 3. Since difference of this embodiment from the first embodiment only resides in the structure of the first sealing plate, same numerals are used as those used in the first embodiment for designating the same structural elements.

Similarly to the first embodiment, the second sealing plate 14 is mounted on the outer member 10, however a first sealing plate 19 of a sealing device 18 of inboard side of this embodiment is formed as a disk configuration and sandwiched between the end face of the inner ring 3 and the caulked portion 2c. The first sealing plate 19 is made by press working of ferrite-stainless steel sheet (e.g. JIS SUS 430 etc.) or preserved cold rolled steel sheet (e.g. JIS SPCC etc.). Bonded by vulcanization integrally on the radially outward end of the first sealing plate 19 at its inboard side is a rotary encoder 15 made of elastomer material with which magnetic substance powder is mingled.

According to this second embodiment, since the first sealing plate 19 is formed as a disk and integrally secured to the end face of the inner ring 3 by plastically deforming the end of the stepped portion 2b of the hub wheel 2, no rain water or dusts penetrates into the bearing from the ambient circumstance and the fitted surfaces and the inner ring 3 are not exposed to the ambient circumstance. Accordingly, the delayed fracture of the inner ring 3 can be positively prevented.

### Third embodiment

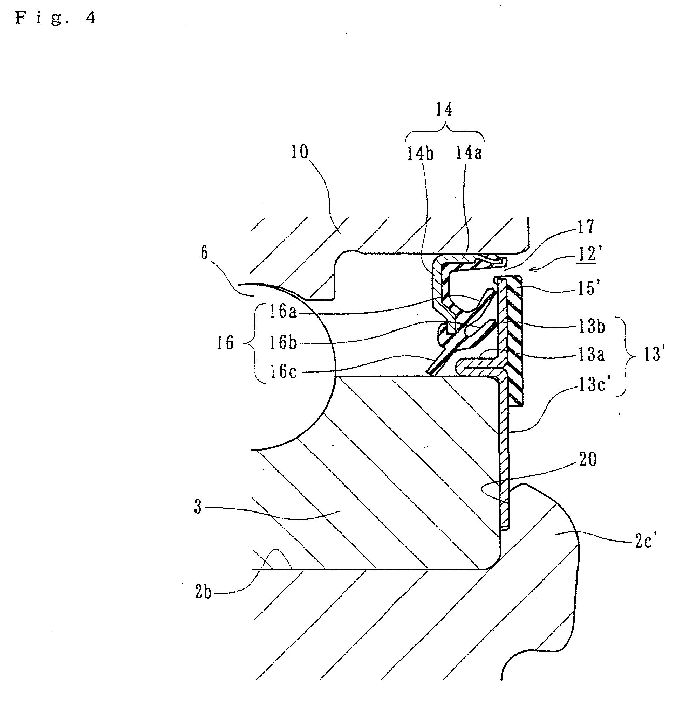

A third embodiment of the bearing for a wheel of vehicle is shown in a partially enlarged view of Fig. 4. Since difference of this embodiment from the second embodiment (Fig. 3) only resides in the structure of the first sealing plate and the caulked portion, same numerals are used as those used in the previous embodiments for designating the same structural elements.

Similarly to the first and second embodiments, the second sealing plate 14 of a sealing device 12' of inboard side of this embodiment is mounted on the outer member 10. On the other hand, a first sealing plate 13' comprises the fitted portion 13a formed by folding, a radially extending portion 13b extending radially outward from the fitted portion 13a, and a disk shaped fixed portion 13c' abutted to the end face of the inner ring 3. The first sealing plate 13' is integrally secured to the end face of the inner ring 3 by press-fitting the folded portion 13a onto the outer circumferential surface and by plastically deforming the end of the stepped portion 2b of the hub wheel 2 to form the caulked portion 2c'. A recess 20 for containing the fixed portion 13c' is previously formed on the surface of the caulked portion 2c' in order to minimize deformation of the first sealing plate 13' during the plastically deforming working. Bonded integrally on the first sealing plate 19 at its inboard side beyond the radially outward end thereof is an encoder 15' made of elastomer material with which magnetic substance powder is mingled.

Similarly to the previous embodiments, in this embodiment, no rain water or dusts penetrates into the bearing from the ambient circumstance, Since the fitted surfaces and the inner ring 3 are not exposed to the ambient circumstance, the delayed fracture of the inner ring 3 can be positively prevented. According to this embodiment, since the area of the encoder 15' can be made large, the attractive forces of magnetic poles N and S can be also increased.

### Fourth embodiment

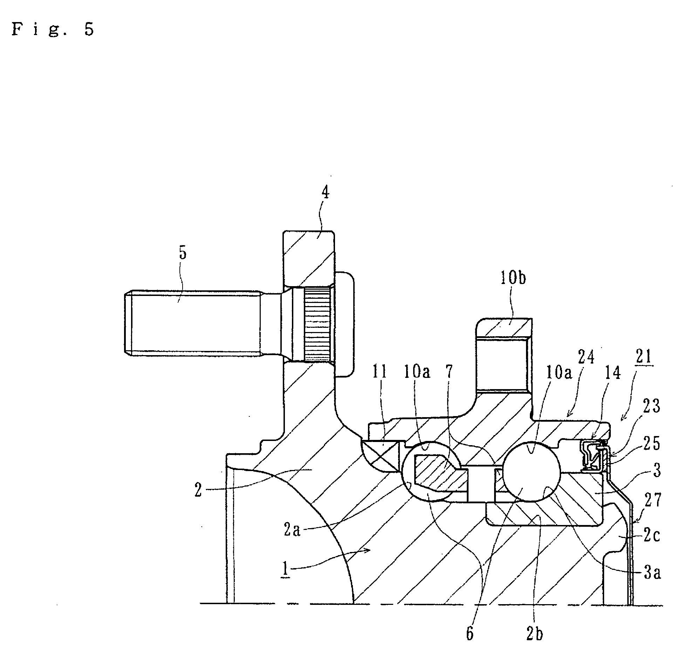

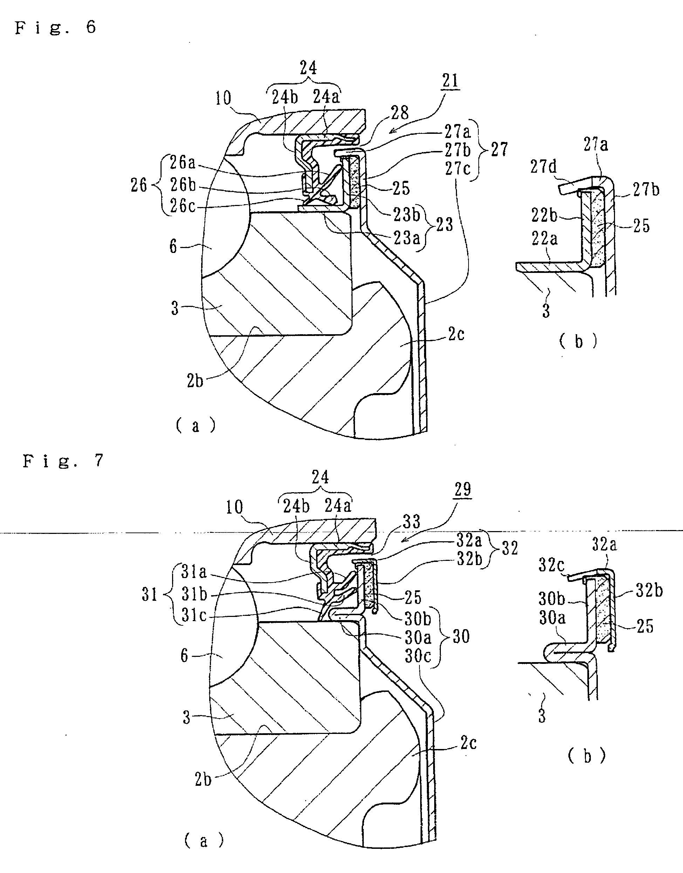

A fourth embodiment of the bearing for a wheel of vehicle is shown in a longitudinal cross-section view of Fig. 5. Fig. 6(a) is a partially enlarged view of Fig. 5. Since difference of this embodiment from the previous embodiments only resides in the structure of the sealing device of inboard side, same numerals are used as those used in the previous embodiments for designating the same structural elements.

As shown in the enlarged view of Fig. 6 (a), the sealing device 21 of inboard side has first and second annular sealing plates 23 and 24 mounted on the inner ring 3 and the outer member 10 respectively. The first sealing plate 23 has a cylindrical portion 23a and a radially extending portion 23b extending radially outward from the end of the cylindrical portion 23a to form a substantially "L" shaped configuration, The first sealing plate 23 is formed by press working of ferromagnetic sheet e.g. ferrite-stainless steel sheet (e.g. JIS SUS 430 etc.) or preserved cold rolled steel sheet (e.g. JIS SPCC etc.). Bonded by vulcanization integrally on the radially extending portion 23b at its inboard side is a magnetic rotary encoder 25 for detecting the speed of wheel rotation made of elastomer material such as rubber or sintered metal including metal binder with which ferromagnetic substance powder such as ferrite is mingled and in which N and S poles are alternately magnetized at a predetermined pitch on the pitch circle diameter (PCD) along the circumferential direction thereof.

The second sealing plate 24 is formed by press working of austenitic-stainless steel sheet (e.g. JIS SUS 304 etc.) or preserved cold rolled steel sheet (e.g. JIS SPCC etc.) and has a cylindrical portion 24a and a radially extending portion 24b extending from the end of the cylindrical portion 24a to form a substantially "L" shaped configuration. Bonded by vulcanization on the second sealing plate 24 is a sealing member 26 integrally formed by side-lip 26a slide-contacting with the radially extending portion 23b of the first sealing plate 23 and a pair of radial-lips 26b and 26c slide-contacting with the outer circumferential surface of the cylindrical portion 23a.

Although it is illustrated the sealing member 26 having the side-lip 26a and a pair of the radial-lips 26 b and 26c, any other structure such as one having a pair of side-lips and a single radial-lip in accordance with objects or a space of the sealing device. In addition, it is also possible to provide a pair of radial-lips and to have one of them directly slide-contacted with the outer circumferential surface of the inner ring 3.

The first sealing plate 23 of this embodiment is provided with a protecting cover 27. The protecting cover 27 is formed by press working of a sheet of non-magnetic material e.g. an austenitic-stainless steel sheet (e.g. JIS SUS 304 etc.) or preserved cold rolled steel sheet (e.g. JIS SPCC etc.). The protecting cover 27 can be made of any non-magnetic material having the surface hardness higher than that of the encoder 25. The protecting cover 27 may be formed of any synthetic resin e.g. polypropylene, polyethylene etc. other than non-magnetic materials mentioned above.

The protecting cover 27 is formed as a cap comprising a cylindrical portion 27 a fitted on the outer circumferential portion of the first sealing plate 23, a radially extending portion 27b radially inwardly extending from the end of the cylindrical portion 27a and intimately contacting with the encoder 25 for covering the surface thereof, and a bottom portion 27c for covering exposed portions of the inner ring 3 and the caulked portion 2c. The cylindrical portion 24a of the second sealing plate 24 and the cylindrical portion 27a of the protecting cover 27 are arranged opposed to each other with keeping a slight radial gap therebetween forming a labyrinth seal 28.

As shown in Fig. 6 (b), it is possible to positively and rigidly secure the protecting cover 27 to the first sealing plate 23 by plastically deforming the tip of the cylindrical portion 27a to form the caulked portion 27d.

According to this embodiment, since the first sealing plate 23 is provided with the cap-shaped protecting cover 27 having the bottom portion 27c in order to cover the fitted portion of the first sealing plate 23 as well as the exposed portions of the inner ring 3 and the caulked portion 2c, the fitted portion, the inner ring 3 as well as the abutted surface between the end of the inner ring 3 and the caulked portion are never exposed to the ambient circumstance. Accordingly, it is possible to prevent generation of delayed fracture due to penetration of the diffusible hydrogen existing in the ambient circumstance into metallographic structure of the inner ring 3 when corrosion would proceed in these portions. In addition, since the surface of the encoder 25 is covered by the radially extending portion 27b of the protecting cover 27 of non-magnetic material, it is possible to prevent damage of the encoder 25 without giving any influence to the accuracy of detection. Furthermore, since the air gap between the encoder 25 and the vehicle speed detecting sensor can be substantially reduced as compared with the structure having the fixed cover mounted on the separate sealing device, it is possible to further improve the accuracy of detection.

### Fifth embodiment

A fifth embodiment of the bearing for a wheel of vehicle is shown in a partially enlarged view of Fig. 5. Since difference of this embodiment from the fourth embodiment (Fig. 6) only resides in the structures of the first sealing plate and the protecting cover, same numerals are used as those used in the first embodiment for designating the same structural elements.

Similarly to the first embodiment, the second sealing plate 24 is mounted on the outer member 10 of the sealing device 29 of inboard side. On the contrary, a first sealing plate 30 is formed as a cap configuration integrally having a folded cylindrical portion 30a, a radially extending portion 30b extending radially outwardly from the end of the cylindrical portion 30a, and a bottom portion 30c for covering the end of the inner ring 3 and the caulked portion 2c. and fitted on the outer circumferential surface of the inner ring 3. The first sealing plate 30 is made by press working of ferrite-stainless steel sheet (e.g. JIS SUS 430 etc.) or preserved cold rolled steel sheet (e.g. JIS SPCC etc.). Bonded by vulcanization integrally on the radially extending portion 30b is an encoder 25 made, e.g. of elastomer material with which magnetic substance powder is mingled.

The second sealing plate 24 has a cylindrical portion 24a and a radially extending portion 24b formed as having a substantially "L" shaped configuration. Bonded by vulcanization on the second sealing plate 24 is a sealing member 31 integrally formed by a pair of side-lips 31a and 31b slide-contacting with the radially extending portion 30b of the first sealing plate 30 and a radial-lip 31c directly slide-contacting with the outer circumferential surface of the inner ring 3. Accordingly, the sealing member 31 makes it possible to positively prevent leakage of grease contained in the bearing as well as penetration of rain water or dusts into the bearing from the ambient circumstance without any restriction as to the bearing space and the configuration or dimension of the sealing plate.

In this embodiment, a protecting cover 32 is mounted on the first sealing plate 30. The protecting cover 32 has a cylindrical portion 32a fitted on the outer circumferential surface of the first sealing plate 30, and a radially extending portion 32b intimately contacting with the encoder 25 for covering the surface thereof and is formed as having a substantially "L"-shaped configuration. The protecting cover 32 is formed by press working of a sheet of non-magnetic material e.g. an austenitic-stainless steel sheet (e.g. JIS SUS 304 etc.) or preserved cold rolled steel sheet (e.g. JIS SPCC etc.). The protecting cover 32 can be made of any non-magnetic material having the surface hardness higher than that of the encoder 25. The protecting cover 27 may be formed of any synthetic resin e.g. polypropylene, polyethylene etc. other than non-magnetic materials mentioned above.

The cylindrical portion 24a of the second sealing plate 24 and the cylindrical portion 32a of the protecting cover 32 are arranged opposed to each other with keeping a slight radial gap therebetween forming a labyrinth seal 28. As shown in Fig. 7 (b), it is possible to positively and rigidly secure the protecting cover 32 to the first sealing plate 30 by plastically deforming the tip of the cylindrical portion 32a to form the caulked portion 32c.

According to this embodiment, since the first sealing plate 30 is formed as the cap-shaped configuration and the exposed portions of the inner ring 3 and the caulked portion 2c are covered by the first sealing plate 30, penetration of rain water or dust into the bearing can be prevented. In addition, since the inner ring 3 as well as the abutted surface between the end of the inner ring 3 and the caulked portion are never exposed to the ambient circumstance, it is possible to prevent generation of the inner ring 3. Accordingly, it is also possible to prevent delayed fracture due to penetration of the diffusible hydrogen existing in the ambient circumstance into metallographic structure of the inner ring 3 when corrosion would proceed in this portion.

In addition, since the surface of the encoder 25 is covered by the radially extending portion 32b of the protecting cover 32 of non-magnetic material, it is possible to prevent damage of the encoder 25 without giving any influence to the accuracy of detection. Furthermore, since the air gap between the encoder 25 and the vehicle speed detecting sensor can be substantially, it is possible to further improve the accuracy of detection.

### Applicability to industry

The bearing of a wheel of vehicle of the present invention can be applied to a bearing of a wheel of vehicle of so-called self-retain type in which the inner ring is press-fitted on the stepped portion of small diameter of the hub wheel and the inner ring is secured by the caulked portion of the stepped portion.

## Claims

1. A bearing for a wheel of vehicle comprising an inner member (1) including a hub wheel (2) integrally formed with a wheel mounting flange (4) at one end thereof and also formed with an inner raceway surface (2a) at an outer circumferential surface and a stepped portion (2b) of small diameter axially extending from the inner raceway surfaces (2a) as well as including an inner ring (3) fitted on the stepped portion (2b) and formed with an another inner raceway surface (3a) at an outer circumferential surface thereof; an outer member (10) integrally formed with a body mounting flange (10b) at the periphery and also formed with double row outer raceway surfaces (10a) at an inner circumferential surface oppositely to the inner raceway surfaces (2a); double row rolling elements (6) arranged between the outer and inner members (1, 10); and sealing devices (11, 12) for sealing annular spaces between the outer and inner members (1, 10); the inner ring (3) is secured to the hub wheel (2) so as not to be moved axially relative to the hub wheel (2) by a caulked portion (2c) formed by plastically deforming radially outward the end of the stepped portion (2b) of small diameter of the hub wheel (2), wherein the sealing device (29) of inboard side of the sealing devices comprises a first sealing plate (30) arranged on the inner ring (3) and a second sealing plate (24) arranged on the outer member (10) oppositely to the first sealing plate (30); the first sealing plate (30) has a radially extending portion (30b) arranged at inboard side of the bearing; bonded on the radially extending portion (30b) of the first sealing plate (30) is an encoder (25) in which magnetic substance powder is mingled and N and S poles are alternately magnetized along the circumferential direction thereof; the second sealing plate (24) has a substantially "L"-shaped cross-section formed by a cylindrical portion (24a) and a radially extending portion (24b) and is integrated with side-lip(s) (31a, 31b) slide-contacting with the radially extending portion (30b) of the first sealing plate (30); a protecting cover (32) is mounted on the first sealing plate (30) so that it intimately contacts with the surface of the encoder (25) ; and the protecting cover (32) is positioned with keeping a slight radial gap relative to the cylindrical portion of the second sealing plate (24), **CHARACTERIZED in that**:
the first sealing plate (30) is formed as a cap integrally formed with a cylindrical portion (30a) formed by folding a portion of the radially extending portion (30b) and being mounted on the outer circumferential surface of the inner ring (3), and a bottom portion (30c) for covering the caulked portion (2c).

2. A bearing for a wheel of vehicle comprising an inner member (1) including a hub wheel (2) integrally formed with a wheel mounting flange (4) at one end thereof and also formed with an inner raceway surface (2a) at an outer circumferential surface and a stepped portion (2b) of small diameter axially extending from the inner raceway surfaces (2a) as well as including an inner ring (3) fitted on the stepped portion (2b) and formed with an another inner raceway surface (3a) at an outer circumferential surface thereof; an outer member (10) integrally formed with a body mounting flange (10b) at the periphery and also formed with double row outer raceway surfaces (10a) at an inner circumferential surface oppositely to the inner raceway surfaces (2a); double row rolling elements (6) arranged between the outer and inner members (1, 10); and sealing devices (11, 21) for sealing annular spaces between the outer and inner members (1, 10); the inner ring (3) is secured to the hub wheel (2) so as not to be moved axially relative to the hub wheel (2) by a caulked portion (2c) formed by plastically deforming radially outward the end of the stepped portion (2b) of small diameter of the hub wheel (2), wherein the sealing device (21) of inboard side of the sealing devices comprises a first sealing plate (23) arranged on the inner ring (3) and a second sealing plate (24) arranged on the outer member (10), oppositely to the first sealing plate (23); the first sealing plate (23) has a radially extending portion (23b) arranged at inboard side of the bearing; bonded on the radially extending portion (23b) of the first sealing plate (23) is an encoder (25) in which magnetic substance powder is mingled and N and S poles are alternately magnetized along the circumferential direction thereof; the second sealing plate (24) has a substantially "L"-shaped cross-section formed by a cylindrical portion (24a) and a radially extending portion (24b) and is integrated with side-lip(s) (26a, 26b) slide-contacting with the radially extending portion (23b) of the first sealing plate (23); a protecting cover (27) is mounted on the first sealing plate (23) so that it intimately contacts with the surface of the encoder (25) ; and the protecting cover (27) is positioned with keeping a slight radial gap relative to the cylindrical portion of the second sealing plate (24), **CHARACTERIZED in that**:
the protecting cover (27) is formed as a cap integrally formed with a cylindrical portion (27a) mounted on the outer circumferential surface of the first sealing plate (23), a radially extending portion (27b) extending radially inward from the end of the cylindrical portion (27a) and intimately contacted with the surface of the encoder (25) and a bottom portion (27c) for covering the caulked portion (2c).

3. A bearing for a wheel of vehicle of claim 2, wherein the protecting cover (27) has a cylindrical portion (27a) mounted on the outer circumferential surface of the first sealing plate (23) and a radially extending portion (23b) extending radially inward from the end of the cylindrical portion and contacted with the surface of the encoder (25).

4. A bearing for a wheel of vehicle of claim 2 or 3, wherein the protecting cover (27) is secured to the first sealing portion (23) by a caulked portion (27d) formed on the cylindrical portion (27a) of the protecting cover (27).

5. A bearing for a wheel of vehicle of any one of claims 1 through 4, wherein the protecting cover (27, 32) is formed by press forming of a non-magnetic steel sheet.

6. A bearing for a wheel of vehicle of any one of claims 1 through 4, wherein the protecting cover (27, 32) is formed by injection molding of synthetic resin.

7. A bearing for a wheel of vehicle of any one of claims 1 through 6, wherein the second sealing plate (24) is integrally formed with radial-lip(s) (31c) directly slide-contacting with the outer circumferential surface of the inner ring (3).

## Patentansprüche

1. Lager für ein Fahrzeugrad, umfassend ein inneres Element (1), das eine Radnabe (2) aufweist, die an ihrem einen Ende einstückig mit einem Radbefestigungsflansch (4) ausgebildet ist und außerdem an einer äußeren umlaufenden Oberfläche mit einer inneren Lauffläche (2a) und einem abgestuften Abschnitt (2b) mit kleinem Durchmesser ausgebildet ist, der sich axial von der inneren Lauffläche (2a) erstreckt und auch einen inneren Ring (3) aufweist, der in den abgestuften Abschnitt (2b) eingepasst ist und an seiner äußeren umlaufenden Oberfläche mit einer weiteren inneren Lauffläche (3a) ausgebildet ist; ein äußeres Element (10), das am Umfang einstückig mit einem Körperbefestigungsflansch (10b) ausgebildet ist und außerdem mit einer Doppelreihe äußerer Laufflächen (10a) an einer inneren umlaufenden Oberfläche ausgebildet ist, die den inneren Laufflächen (2a) gegenüberliegt; eine Doppelreihe Wälzkörper (6), die zwischen dem inneren und dem äußeren Element (1, 10) angeordnet sind; und Dichtungseinrichtungen (11, 12) zum Abdichten ringförmiger Zwischenräume zwischen dem äußeren und dem inneren Element (1, 10); wobei der innere Ring (3) mit einem verstemmten Abschnitt (2c), der durch radial nach außen gerichtetes plastisches Umformen der Enden des abgestuften Abschnitts (2b) mit kleinem Durchmesser der Radnabe (2) ausgebildet ist, an der Radnabe (2) befestigt ist, so dass er im Verhältnis relativ zur Radnabe (2) nicht axial bewegt werden kann, wobei die Dichtungseinrichtung (29) an der Fahrzeuginnenseite der Dichtungseinrichtung eine erste Dichtungsplatte (30) umfasst, die am inneren Ring (3) angeordnet ist, und eine zweite Dichtungsplatte (24), die am äußeren Element (10) gegenüber der ersten Dichtungsplatte (30) angeordnet ist; wobei die erste Dichtungsplatte (30) einen sich radial erstreckenden Abschnitt (30b) aufweist, der an der Fahrzeuginnenseite des Lagers angeordnet ist, wobei an den sich radial erstreckenden Abschnitt (30b) der ersten
Dichtungsplatte (30) ein Encoder (25) gebunden ist, in den Pulver einer magnetischen Substanz gemischt ist und in dem entlang seiner umlaufenden Richtung abwechselnd N- und S-Pole magnetisiert sind; wobei die zweite
Dichtungsplatte (24) einen im Wesentlichen L-förmigen Querschnitt aufweist, der durch einen zylindrischen Abschnitt (24a) und einen sich radial erstreckenden Abschnitt (24b) ausgebildet ist, und (eine) integrierte Seitenlippe(n) (31a, 31b) aufweist, die mit dem sich radial erstreckenden Abschnitt (30b) der ersten Dichtungsplatte (30) in Gleitkontakt steht/stehen; wobei eine Schutzabdeckung (32) derart an die erste Dichtungsplatte (30) montiert ist, dass sie in engem Kontakt mit der Oberfläche des Encoders (25) steht; und wobei die Schutzabdeckung (32) derart angeordnet ist, dass sie relativ zum zylindrischen Abschnitt der zweiten Dichtungsplatte (24) einen kleinen radialen Spalt bildet, **dadurch gekennzeichnet, dass** die erste Dichtungsplatte (30) als Deckel ausgebildet ist, der einstückig aus einem zylindrischen Abschnitt (30a), der durch Falten eines Abschnitts des sich radial erstreckenden Abschnitts (30b) ausgebildet ist und an die äußere umlaufende Oberfläche des inneren Rings (3) montiert ist, und aus einem unteren Abschnitt (30c) zum Abdecken des verstemmten Abschnitts (2c), ausgebildet ist.

2. Lager für ein Fahrzeugrad, umfassend ein inneres Element (1), das eine Radnabe (2) aufweist, die an ihrem einen Ende einstückig mit einem Radbefestigungsflansch (4) ausgebildet ist und außerdem an einer äußeren umlaufenden Oberfläche mit einer inneren Lauffläche (2a) und einem abgestuften Abschnitt (2b) mit kleinem Durchmesser ausgebildet ist, der sich axial von der inneren Lauffläche (2a) erstreckt und auch einen inneren Ring (3) aufweist, der in den abgestuften Abschnitt (2b) eingepasst ist und an seiner äußeren umlaufenden Oberfläche mit einer weiteren inneren Lauffläche (3a) ausgebildet ist; ein äußeres Element (10), das am Umfang einstückig mit einem Körperbefestigungsflansch (10b) ausgebildet ist und außerdem mit einer Doppelreihe äußerer Laufflächen (10a) an einer inneren umlaufenden Oberfläche ausgebildet ist, die den inneren Laufflächen (2a) gegenüberliegt; eine Doppelreihe Wälzkörper (6), die zwischen dem inneren und dem äußeren Element (1, 10) angeordnet sind; und Dichtungseinrichtungen (11, 12) zum Abdichten ringförmiger Zwischenräume zwischen dem äußeren und dem inneren Element (1, 10); wobei der innere Ring (3) mit einem verstemmten Abschnitt (2c), der durch radial nach außen gerichtetes plastisches Umformen der Enden des abgestuften Abschnitts (2b) mit kleinem Durchmesser der Radnabe (2) ausgebildet ist, an der Radnabe (2) befestigt ist, so dass er im Verhältnis relativ zur Radnabe (2) nicht axial bewegt werden kann, wobei die Dichtungseinrichtung (21) an der Fahrzeuginnenseite der Dichtungseinrichtung eine erste Dichtungsplatte (23) umfasst, die am inneren Ring (3) angeordnet ist, und eine zweite Dichtungsplatte (24), die am äußeren Element (10) gegenüber der ersten Dichtungsplatte (23) angeordnet ist; wobei die erste Dichtungsplatte (23) einen sich radial erstreckenden Abschnitt (23b) aufweist, der an der Fahrzeuginnenseite des Lagers angeordnet ist; wobei an den sich radial erstreckenden Abschnitt (23b) der ersten
Dichtungsplatte (23) ein Encoder (25) gebunden ist, in den Pulver einer magnetischen Substanz gemischt ist und in dem entlang seiner umlaufenden Richtung abwechselnd N- und S-Pole magnetisiert sind; wobei die zweite
Dichtungsplatte (24) einen im Wesentlichen L-förmigen Querschnitt aufweist, der durch einen zylindrischen Abschnitt (24a) und einen sich radial erstreckenden Abschnitt (24b) ausgebildet ist, und (eine) integrierte Seitenlippe(n) (26a, 26b) aufweist, die mit dem sich radial erstreckenden Abschnitt (23b) der ersten Dichtungsplatte (23) in Gleitkontakt steht/stehen; wobei eine Schutzabdeckung (27) derart an die erste Dichtungsplatte (23) montiert ist, dass sie in engem Kontakt mit der Oberfläche des Encoders (25) steht, und wobei die Schutzabdeckung (27) derart angeordnet ist, dass sie relativ zum zylindrischen Abschnitt der zweiten Dichtungsplatte (24) einen kleinen radialen Spalt bildet, **dadurch gekennzeichnet, dass** die Schutzabdeckung (27) als Deckel ausgebildet ist, der einstückig aus einem zylindrischen Abschnitt (27a), der an die äußere umlaufende Oberfläche der ersten Dichtungsplatte (23) montiert ist, aus einem sich radial erstreckenden Abschnitt (27b), der sich vom Ende des zylindrischen Abschnitts (27a) radial einwärts erstreckt und in engem Kontakt mit der Oberfläche des Encoders (25) steht, und aus einem unteren Abschnitt (27c) zum Abdecken des verstemmten Abschnitts (2c), ausgebildet ist.

3. Lager für ein Fahrzeugrad nach Anspruch 2, wobei die Schutzabdeckung (27) einen zylindrischen Abschnitt (27a) aufweist, der an die äußere umlaufende Oberfläche der ersten Dichtungsplatte (23) und einen sich radial erstreckenden Abschnitt (23b) montiert ist, der sich vom Ende des zylindrischen Abschnitts radial einwärts erstreckt und mit der Oberfläche des Encoders (25) in Kontakt steht.

4. Lager für ein Fahrzeugrad nach Anspruch 2 oder 3, wobei die Schutzabdeckung (27) durch einen verstemmten Abschnitt (27d), der am zylindrischen Abschnitt (27a) der Schutzabdeckung (27) ausgebildet ist, am ersten Dichtungsabschnitt (23) befestigt ist.

5. Lager für ein Fahrzeugrad nach einem der Ansprüche 1 bis 4, wobei die Schutzabdeckung (27, 32) durch Formpressen eines nichtmagnetischen Stahlblechs ausgebildet ist.

6. Lager für ein Fahrzeugrad nach einem der Ansprüche 1 bis 4, wobei die Schutzabdeckung (27, 32) durch Spritzgießen eines synthetischen Harzes ausgebildet ist.

7. Lager für ein Fahrzeugrad nach einem der Ansprüche 1 bis 6, wobei die zweite Dichtungsplatte (24) einstückig mit (einer) integrierten Radiallippe(n) (31c) ausgebildet ist, die in direktem Gleitkontakt mit der äußeren umlaufenden Oberfläche des inneren Rings (3) steht/stehen.

## Revendications

1. Palier pour une roue de véhicule, comprenant un organe interne (1) incluant un moyeu de roue (2) faisant corps avec un flasque (4) de montage d'une roue à une extrémité, et également pourvu d'un chemin de roulement interne (2a) sur une surface périphérique externe, et une portion en gradins (2b) de faible diamètre, s'étendant dans le sens axial à partir des chemins de roulement internes (2a), de même que comprenant une bague interne (3) ajustée sur la portion en gradin (2b) et pourvue d'un autre chemin de roulement interne (3a) sur une surface périphérique externe; un organe externe (10) faisant corps avec un flasque (10b) de montage sur un châssis, à la périphérie, et également pourvu d'un double rang de chemins de roulement externes (10a) sur une surface périphérique interne, à l'opposé des chemins de roulement internes (2a); des organes de roulement (6) en deux rangées, agencés entre les organes externe et interne (1, 10); et des dispositifs d'étanchéité (11, 12) pour sceller des espaces annulaires entre les organes externe et interne (1, 10); la bague interne (3) est fixée au moyeu de roue (2) de façon à ne pas se mouvoir axialement par rapport au moyeu de roue (2), grâce à une portion matée (2c) formée par déformation plastique, radialement vers l'extérieur, de l'extrémité de la portion en gradin (2b) de faible diamètre du moyeu de roue (2), dans lequel le dispositif d'étanchéité (29) du coté interne des dispositifs d'étanchéité comprend une première plaque d'étanchéité (30) agencée sur la bague interne (3) et une seconde plaque d'étanchéité (24) agencée sur l'organe externe (10), à l'opposé de la première plaque d'étanchéité (30); la première plaque d'étanchéité (30) possède une portion (30b) s'étendant radialement, agencée sur le côté interne du palier; un codeur (25) est fixé à la portion radiale (30b) de la première plaque d'étanchéité (30), codeur dans lequel est mélangé une poudre de substance magnétique et des pôles N et S sont alternativement magnétisés le long de sa direction périphérique; la seconde plaque d'étanchéité (24) présente une section sensiblement en "L" formée par une portion cylindrique (24a) et une portion radiale (24b), et fait corps avec une ou des lèvres latérales (31a, 31b) en contact de glissement avec la portion radiale (30b) de la première plaque d'étanchéité (30); un couvercle de protection (32) est monté sur la première plaque d'étanchéité (30) de façon à être en contact intime avec la surface du codeur (25); et le couvercle de protection (32) est positionné en maintenant un faible jeu radial par rapport à la portion cylindrique de la seconde plaque d'étanchéité (24),
**caractérisé en ce que** :
la première plaque d'étanchéité (30) est formée comme un capuchon d'une pièce avec une portion cylindrique (30a) formée par pliage d'une partie de la portion radiale (30b) et montée sur la surface périphérique externe de la bague interne (3), et une portion inférieure (30c) pour recouvrir la portion matée (2c).

2. Palier pour une roue de véhicule, comprenant un organe interne (1) incluant un moyeu de roue (2) faisant corps avec un flasque (4) de montage d'une roue à une extrémité, et également pourvu d'un chemin de roulement interne (2a) sur une surface périphérique externe, et une portion en gradins (2b) de faible diamètre, s'étendant dans le sens axial à partir des chemins de roulement internes (2a), de même que comprenant une bague interne (3) ajustée sur la portion en gradin (2b) et pourvue d'un autre chemin de roulement interne (3a) sur une surface périphérique externe; un organe externe (10) faisant corps avec un flasque (10b) de montage sur un châssis, à la périphérie, et également pourvu d'un double rang de chemins de roulement externes (10a) sur une surface périphérique interne, à l'opposé des chemin de roulement internes (2a); des organes de roulement (6) en deux rangées, agencés entre les organes externe et interne (1, 10); et des dispositifs d'étanchéité (11, 21) pour sceller des espaces annulaires entre les organes externe et interne (1, 10); la bague interne (3) est fixée au moyeu de roue (2) de façon à ne pas se mouvoir axialement par rapport au moyeu de roue (2), grâce à une portion matée (2c) formée par déformation plastique, radialement vers l'extérieur, de l'extrémité de la portion en gradin (2b) de faible diamètre du moyeu de roue (2), dans lequel le dispositif d'étanchéité (21) du côté interne des dispositifs d'étanchéité comprend une première plaque d'étanchéité (23) agencée sur la bague interne (3) et une seconde plaque d'étanchéité (24) agencée sur l'organe externe (10), à l'opposé de la première plaque d'étanchéité (23); la première plaque d'étanchéité (23) possède une portion (23b) s'étendant radialement, agencée sur le côté interne du palier; un codeur (25) est fixé à la portion radiale (23b) de la première plaque d'étanchéité (23), codeur dans lequel est mélangé une poudre de substance magnétique et des pôles N et S sont alternativement magnétisés le long de sa direction périphérique; la seconde plaque d'étanchéité (24) présente une section sensiblement en "L" formée par une portion cylindrique (24a) et une portion radiale (24b), et fait corps avec une ou des lèvres latérales (26a, 26b) en contact de glissement avec la portion radiale (23b) de la première plaque d'étanchéité (23); un couvercle de protection (27) est monté sur la première plaque d'étanchéité (23) de façon à être en contact intime avec la surface du codeur (25); et le couvercle de protection (27) est positionné en maintenant un faible jeu radial par rapport à la portion cylindrique de la seconde plaque d'étanchéité (24),
**caractérisé en ce que** :
le couvercle de protection (27) est formé comme un capuchon d'une pièce avec une portion cylindrique (27a) montée sur la surface périphérique externe de la première plaque d'étanchéité (23), et une portion radiale (27b) s'étendant radialement vers l'intérieur à partir de l'extrémité de la portion cylindrique (27a) et en contact intime avec la surface du codeur (25) et une portion inférieure (27c) pour recouvrir la portion matée (2c).

3. Palier pour une roue de véhicule selon la revendication 2, dans lequel le couvercle de protection (27) possède une portion cylindrique (27a) montée sur la surface périphérique externe de la première plaque d'étanchéité (23) et une portion radiale (23b) s'étendant radialement vers l'intérieur à partir de l'extrémité de la portion cylindrique et en contact avec la surface du codeur (25).

4. Palier pour une roue de véhicule selon la revendication 2 ou 3, dans lequel le couvercle de protection (27) est fixé à la première plaque d'étanchéité (23) par une portion matée (27d) formée sur la portion cylindrique (27a) du couvercle de protection (27).

5. Palier pour une roue de véhicule selon l'une quelconque des revendications 1 à 4, dans lequel le couvercle de protection (27, 32) est formé par façonnage à la presse d'une tôle en acier non magnétique.

6. Palier pour une roue de véhicule selon l'une quelconque des revendications 1 à 4, dans lequel le couvercle de protection (27, 32) est formé par moulage par injection d'une résine synthétique.

7. Palier pour une roue de véhicule selon l'une quelconque des revendications 1 à 6, dans lequel la seconde plaque d'étanchéité (24) est formée d'une pièce avec une ou des lèvres radiales (31c) en contact à glissement direct avec la surface périphérique externe de la bague interne (3).
